(19) Europäisches Patentamt

European Patent Office

Office européen des brevets

(11) **EP 0 725 893 B1**

(12) **EUROPÄISCHE PATENTSCHRIFT**

(45) Veröffentlichungstag und Bekanntmachung des Hinweises auf die Patenterteilung:
**26.01.2000 Patentblatt 2000/04**

(51) Int. Cl.[7]: **F02D 35/02**, F02D 37/02, F02P 5/04

(21) Anmeldenummer: **94928300.6**

(22) Anmeldetag: **12.10.1994**

(86) Internationale Anmeldenummer:
**PCT/DE94/01200**

(87) Internationale Veröffentlichungsnummer:
**WO 95/12062 (04.05.1995 Gazette 1995/19)**

(54) **VERFAHREN ZUM STEUERN DER ABGASTEMPERATUR BEI EINEM VERBRENNUNGSMOTOR MIT KLOPFREGELUNG**

PROCESS FOR CONTROLLING EXHAUST GAS TEMPERATURE IN AN INTERNAL COMBUSTION ENGINE WITH PINKING REGULATION

PROCEDE DE COMMANDE DE LA TEMPERATURE DES GAZ D'ECHAPPEMENT D'UN MOTEUR A COMBUSTION INTERNE A REGULATION DU CLIQUETIS

(84) Benannte Vertragsstaaten:
**DE FR IT SE**

(30) Priorität: **28.10.1993 DE 4336775**

(43) Veröffentlichungstag der Anmeldung:
**14.08.1996 Patentblatt 1996/33**

(73) Patentinhaber: **ROBERT BOSCH GMBH**
**70442 Stuttgart (DE)**

(72) Erfinder:
- **STEINBRENNER, Ulrich**
  **D-70195 Stuttgart (DE)**
- **WAGNER, Wolfgang**
  **D-70825 Korntal-Münchingen (DE)**
- **SCHREDER, Christian-Ernst**
  **D-71067 Sindelfingen (DE)**

(56) Entgegenhaltungen:
FR-A- 2 476 748          GB-A- 2 262 615
US-A- 4 716 873          US-A- 4 825 836

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Steuern der Abgastemperatur bei einem Verbrennungsmotor mit Klopfregelung.

Im folgenden wird häufig von einer Last oder einem Lastsignal gesprochen. Es handelt sich hierbei um ein Signal, das im wesentlichen die vom Motor aktuell geforderte Leistung anzeigt. Das Lastsignal ist abhängig vom jeweiligen Motorsteuerungskonzept entweder z. B. der Verstellwinkel der Drosselklappe, der Unterdruck im Saugrohr oder der Massefluß angesaugter Luft.

Stand der Technik

Das Steuergerät MOTRONIC der Bosch GmbH, Stuttgart, Deutschland verfügt seit Jahren über eine zylinderselektive Klopfregelung und eine globale Einspritzzeitverlängerung in Zusammenhang mit der Klopfregelung. Wenn die Klopfregelung einen Klopfvorgang in einem Zylinder feststellt, verstellt sie die Zündung für diesen Zylinder mit einem vorgegebenen größeren Schritt in Richtung Spät und nimmt dann diese Spätverstellung in kleinen Schritten wieder so lange zurück, bis entweder keine Spätverstellung mehr vorliegt oder kein erneutes Klopfen auftritt. Wenn die Zündung nach Spät verstellt wird, kann nur ein kleinerer Anteil der Verbrennungsenergie als zuvor in mechanische Energie umgewandelt werden, was eine Temperaturerhöhung des Abgases zur Folge hat. Um zu verhindern, daß es dadurch zu thermischer Überlastung des Motors oder des Abgaskrümmers kommt, wird dann, wenn die Summe der Spätverstellungen für alle Zylinder einen vorgegebenen Wert überschreitet, die Einspritzzeit mit zunehmendem Wert der Summe verlängert. Die zuvor laufende Lambdaregelung wird dabei abgeschaltet. Durch die Verlängerung der Einspritzzeit kommt es zu einer Anfettung des angesaugten Luft/Kraftstoff-Gemischs, wodurch eine Kühlung erzielt wird.

Das MOTRONIC-Steuergerät ist damit eine Vorrichtung, die das Verfahren gemäß dem Oberbegriff von Anspruch 1 ausführt, bei der eine Einspritzzeit-Modifiziereinrichtung so ausgebildet ist, daß sie die von einer Einspritzzeit-Steuerungseinrichtung berechnete Einspritzzeit für alle Zylinder abhängig vom Wert der genannten Summe verlängert.

Aus der US-A-4,825,836 ist eine Klopfregelung für einen Verbrennungsmotor bekannt, bei der in Abhängigkeit vom detektierten Klopfen der Zündwinkel für alle Zylinder nach spät verstellt wird. Der durch eine Zündwinkel-Spätverstellung verursachte Anstieg der Abgastemperatur wird dadurch begrenzt, daß für alle Zylinder eine Anreicherung des angesaugten Luft/Kraftstoff-Gemisches vorgenommen wird.

Bei einem aus der GB-A-22 62 615 bekannten Verfahren werden die Kraftstoffzufuhr und der Zündzeitpunkt für jeden einzelnen Zylinder so geregelt, daß ein detektiertes Klopfen verschwindet. Es wird ein direkter Zusammenhang zwischen der zugeführten Kraftstoffmenge (bzw. Einspritzdauer) und dem Grad des Klopfens hergestellt. Die zugeführte Kraftstoffmenge orientiet sich hier nicht an der Abgastemperatur.

Darstellung der Erfindung

Der Erfindung liegt die Aufgabe zugrunde, ein Verfahren zum Steuern der Abgastemperatur bei einem Verbrennungsmotor mit Klopfregelung anzugeben, mit dem sich lokale thermische Überlastungen eines Motors und seines Abgaskrümmers verhindern lassen. Die Erfindung nutzt die Erkenntnis, daß mit den von der Klopfregelung ausgegebenen zylinderspezifischen Spätverstellungswerten für die Zündung zylinderselektive Werte vorliegen, die ein jeweiliges Maß für die Temperaturerhöhung darstellen, die wegen der Spätverstellung in einem Zylinder und dem zugehörigen Abgaskrümmer zu erwarten ist. Die Abgastemperatur kann nun dadurch zylinderselektiv im wesentlichen konstant gehalten werden, daß eine zylinderselektive Kraftstoffanreicherung abhängig vom Spätverstellungswert der Zündung für einen jeweiligen Zylinder erfolgt.

Vorzugsweise wird ein Kennfeld verwendet, das über Werte der Drehzahl und der Last adressierbar Maximalwerte für die Kraftstoffanreicherung speichert, bei denen es sich um diejenigen Werte handelt, wie sie gelten, wenn der Zündwinkel in maximal zulässiger Weise nach Spät verstellt ist und dennoch eine vorgegebene Abgastemperatur nicht überschritten werden soll. Diese Maximalwerte werden dann nur bruchteilig für die Anreicherung verwendet, wenn eine aktuelle Spätverstellung unter der maximal möglichen bleibt. Durch diese Vorgehensweise ist sichergestellt, daß nie zu stark angefettet wird, also nie unzulässig schlechte Abgaswerte oder unzulässig hohe Kraftstoffverbrauchswerte erzielt werden.

Mit dem erfindungsgemäßen Verfahren läßt sich lokale thermische Überlastungen sicher mit im Vergleich zum Stand der Technik geringer Kraftstoffanreicherung vermeiden. Beim Stand der Technik gemäß US-A-4,825,836 wird das Gemisch für alle Zylinder auch dann angefettet, wenn nur in einem einzigen Zylinder Klopfen auftritt. Um dennoch keine zu schlechten Abgaswerte und keinen zu hohen Verbrauch zu erhalten, wurde nur möglichst wenig angefettet. Dies konnte aber dazu führen, daß dann, wenn nur ein einzelner Zylinder stark klopfte, dieser nicht ausreichend gekühlt werden konnte. Durch die Erfindung sind alle diese Nachteile beseitigt.

Zeichnung

Fig. 1: schematische Darstellung eines Verbrennungsmotors mit Zündkerzen und Einspritzventilen und mit einer Vorrichtung zum Steuern der Abgastemperatur durch Vornehmen einer Gemischanfettung im Fall einer Zündungs-Spätverstellung; und

Fig. 2: Blockfunktionsdiagramm der eben genannten Vorrichtung zum Steuern der Abgastemperatur.

Beschreibung von Ausführungsbeispielen

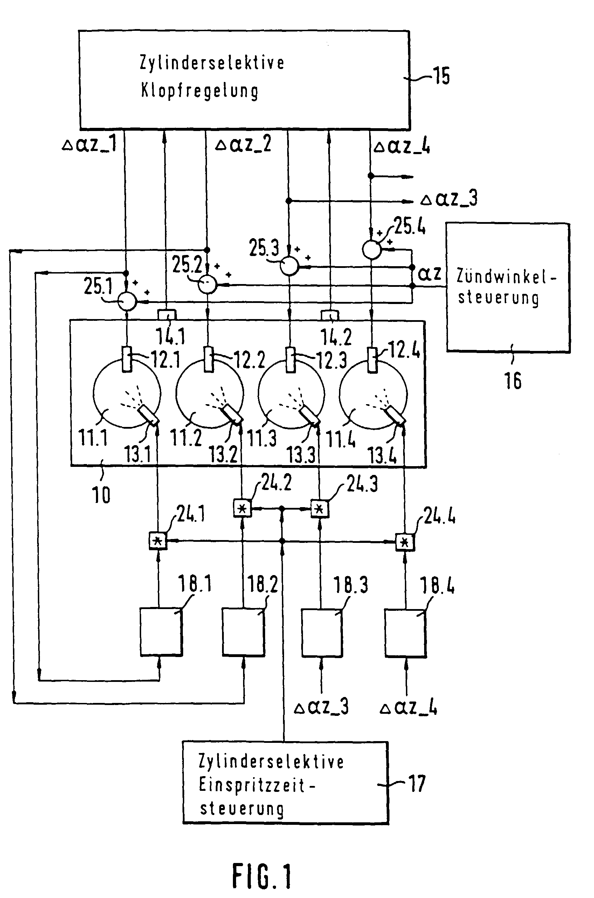

Fig. 1 zeigt unter anderem schematisch einen Verbrennungsmotor 10 mit vier Zylindern 11.1 bis 11.4. Jedem Zylinder ist eine von vier Zündkerzen 12.1 bis 12.4 und eines von vier Einspritzventilen 13.1 bis 13.4 zugeordnet. Am Zylinderblock sind zwei Klopfsensoren 14.1 und 14.2 angebracht, die ihre Ausgangssignale an eine Klopfregelungseinrichtung 15 liefern. Die Zündzeitpunkteinstellung für die Zündkerzen erfolgt durch Ausgangssignale dieser Klopfregelungseinrichtung zusammen mit Ausgangssignalen einer Zündwinkel-Steuerungseinrichtung 16. Die Einspritzventile werden vom Ausgangssignal einer gemeinsamen Einspritzzeit-Steuerungseinrichtung 17, zusammen mit dem jeweiligen Ausgangssignal einer von vier Einspritzzeit-Modifiziereinheiten 18.1 bis 18.4 festgelegt.

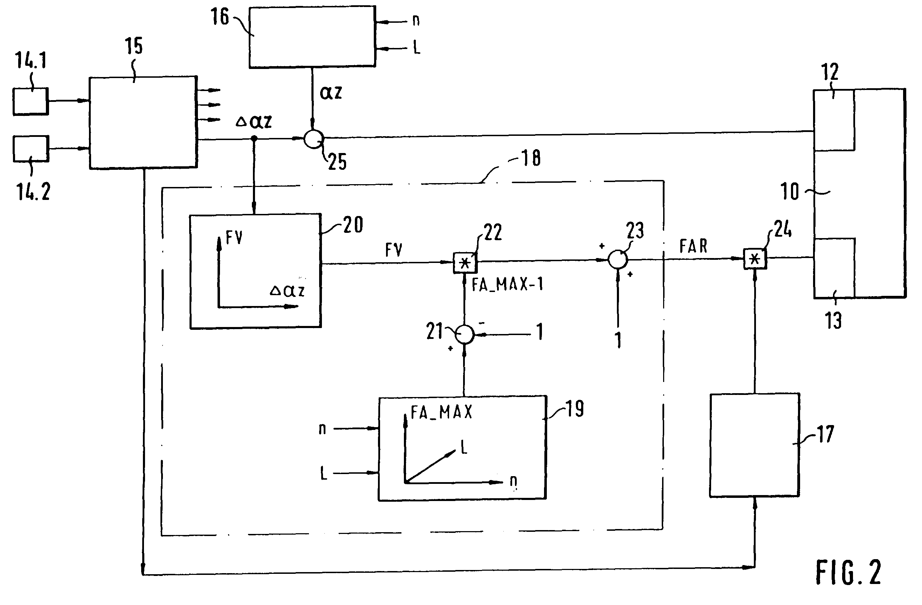

Fig. 2 macht die Funktion der Modifiziereinheiten 18.1 bis 18.4 anhand eines Funktionsblockdiagramms deutlicher. Dabei ist eine einzige Modifiziereinheit 18 stellvertretend für die vier vorstehend genannten dargestellt. Diese Modifiziereinheit 18 verfügt über ein Maximalanreicherungskennfeld 19, ein Verringerungsfaktorkennfeld 20, eine Subtrahierstelle 21, eine Multiplizierstelle 22 und eine Addierstelle 23. Das Ausgangssignal dieser Modifiziereinheit 18 wird in einer Faktormultiplizierstelle 24 mit dem Ausgangssignal der Einspritzzeitsteuerung 17 multiplikativ verknüpft; das so gebildete Einspritzzeitsignal wird dem jeweiligen der Einspritzventile 13.1 bis 13.4 zugeführt, zu dem die Modifiziereinheit 18 gehört.

Wenn der Motor 10 mit einer bestimmten Drehzahl n und einer bestimmten Last L betrieben wird, wird von der Zündwinkelsteuerung 16 ein zugehöriger Zündwinkel für alle Zylinder gemeinsam bestimmt. Wenn der Motor mit diesem Zündwinkel betrieben wird, kann es zu Klopfvorgängen in mindestens einem der Zylinder kommen, was von den Klopfsensoren 14.1 und 14.2 festgestellt wird. Aus den beiden Signalen erkennt die Klopfregelungseinrichtung 15, in welchem Zylinder klopfende Verbrennung aufgetreten ist. Sie gibt dann für diesen Zylinder eine Zündwinkeländerung $\Delta\alpha z$ aus. Diese wird in einer Winkeladditionsstelle 25 zu dem von der Zündwinkelsteuerung 16 ausgegebenen Zündwinkel $\alpha z$ addiert, und dann wird die Zündkerze des zugehörigen Zylinders entsprechend diesem summierten Zündwinkel gezündet. Zugleich wird das Winkeländerungssignal $\Delta\alpha z$ der Modifiziereinheit 18 zugeführt.

Bevor näher erläutert wird, welche Wirkung das Winkeländerungssignal $\Delta\alpha z$ in der Modifiziereinheit 18 hervorruft, sei die Funktion des Maximalanreicherungskennfeldes 19 beschrieben. Dieses wird wie folgt aufgestellt. Der Motor wird mit Benzin mit starker Klopfneigung und mit sehr warmer Ansaugluft so betrieben, daß die maximal zulässige Winkeländerung in Richtung Spät eingestellt werden muß, um Klopfen zu verhindern. Dann wird ermittelt, wie stark das dem Motor zugeführte Gemisch angefettet werden muß, um die Abgastemperatur nicht über einen zulässigen Wert steigen zu lassen. Der Anfettungsgrad wird durch einen Anreicherungsfaktor ausgedrückt. Bei praktischen Versuchen hat sich gezeigt, daß dieser Faktor bis auf den Wert 2 ansteigen kann, daß der Motor also bis zu doppelt soviel Kraftstoff zugeführt bekommt, als es stöchiometrisch erforderlich wäre. Ein solcher Anreicherungsfaktor wird für verschiedene Kombinationen der Drehzahl n und der Last L ermittelt und adressierbar über die jeweiligen Werte von n und L in das Maximalanreicherungskennfeld 19 eingeschrieben.

Wird der Motor bei weniger ungünstigen Bedingungen betrieben, als sie für die Aufstellung des Maximalanreicherungskennfeldes eingestellt wurden, reicht eine kleinere als die maximal mögliche Winkeländerung aus, um Klopfen zu verhindern. Beträgt die maximal mögliche Winkeländerung $\Delta\alpha z$ z. B. 15° und ist dann bei einer bestimmten Kombination der Werte von n und L ein maximaler Anreicherungsfaktor von 1,5 erforderlich, um die Abgastemperatur nicht über den vorgegebenen Wert steigen zu lassen, beträgt der Anreicherungsfaktor, wie er bei einer Winkeländerung von nur 5° bei denselben Werten von n und L erforderlich ist, um die Temperatur nicht über den genannten Wert ansteigen zu lassen, nur 1,1 . Der maximale Anreicherungsfaktor muß also abhängig vom jeweils vorliegenden Wert der Winkeländerung $\Delta\alpha z$ modifiziert werden. Hierzu dient das Verringerungsfaktorkennfeld 20.

Die verschiedenen Funktionsgruppen innerhalb der Modifiziereinheit 18 wirken so zusammen, daß für jeden Zylinder i der folgende Zusammenhang erfüllt ist:

$$FAR = FV\_i(\Delta\alpha z\_i) \cdot (FA\_MAX-1) + 1$$

Dabei ist $FV\_i$ der aus dem Verringerungsfaktorkennfeld 20 zugehörig zur aktuellen Winkeländerung $\Delta\alpha z\_i$ gehörig ausgelesene Verringerungsfaktor (Faktor kleiner 1). FA_MAX ist der Maximalanreicherungsfaktor, wie er für die aktuellen Werte von n und L aus dem Maximalanreicherungsfaktorkennfeld 19 ausgelesen wurde. Die in der obigen Gleichung angegebene Multiplikation erfolgt in der Multiplikationsstelle 22, die Subtraktion des Wertes 1 vom Wert FA_MAX erfolgt in der Subtraktionsstelle 21, und die Addition des Wertes 1 erfolgt in der Additionsstelle 23. Der so gebildete Anreicherungsfaktor FAR wird in der Faktormultiplikationsstelle 24 mit der aus der Einspritzzeitsteuerung 17 ausgegebenen Einspritzzeit multipliziert. Dabei ist die Lambdaregelung innerhalb der Einspritzzeitsteuerung 17 ausgeschaltet, während die Anreicherung wegen der Klopfverhinderungsfunktion aktiviert ist. Um die Lambdaregelung anzuhalten, erhält die Einspritzzeitsteuerung 17 ein Signal von der Klopfregelung 15, das anzeigt, daß eine so große Winkeländerung ausgegeben wird, daß zur Kompensation der eigentlich daraus resultierenden Temperaturerhöhung der Kraftstoff angereichert werden muß.

Beim beschriebenen Ausführungsbeispiel wird aus dem Verringerungsfaktorkennfeld 20 ein jeweiliger Verringerungsfaktor FV nur abhängig von der Winkeländerung $\Delta\alpha z$ ausgelesen. Jedoch kann dieses Kennfeld auch noch last- und drehzahlabhängig sein.

Anstatt für jedes Wertepaar von Drehzahl und Last von einem maximalen Anreicherungsfaktor auszugehen und diesen durch einen Verringerungsfaktor zu modifizieren, kann auch so vorgegangen werden, daß Anreicherungsfaktoren größer 1 abhängig von der Zündwinkeländerung $\Delta\alpha z$ aus einer Kennlinie oder einem Kennfeld, in das noch weitere Größen eingehen, ausgelesen wird und dann dieser Wert auf einen maximal zulässigen Wert, abhängig von den aktuellen Werten von Drehzahl und Last, begrenzt wird. Jedoch läßt sich die anhand von Fig. 2 beschriebene Vorgehensweise besonders gut applizieren.

Beim Ausführungsbeispiel wurden zwei Klopfsensoren verwendet. Es ist jedoch auch möglich, mehr als zwei oder auch nur einen einzigen einzusetzen. Zylinderselektive Klopferkennung ist auch im letzteren Fall möglich, wenn alle Klopfsignale zuverlässig wahrgenommen werden können, da ein erfasstes Klopfsignal immer nur von dem Zylinder kommen kann, der gerade gezündet hat.

## Patentansprüche

1. Verfahren zum Steuern der Abgastemperatur bei einem Verbrennungsmotor (10) mit Klopfregelung durch Verändern des dem Motor zugeführten Luft/Kraftstoff-Gemisches abhängig von Spätverstellungen der Zündung zum Verhindern von Klopfen, wie sie von einer Klopfregelungseinrichtung (15) vorgenommen werden, wobei mit zunehmender Spätverstellung zunehmend angefettet wird; dadurch gekennzeichnet, daß die

Anreicherung zylinderselektiv abhängig von der jeweiligen Spätverstellung für die Zündung in einem Zylinder (11.1 - 11.4) verändert wird, und daß für vorgegebene Wertpaare von Drehzahl und Last Maximalanreicherungsfaktoren (FA_MAX) so bestimmt werden, daß bei maximaler Spätverstellung der Zündung die Abgastemperatur jeweils unter einem vorgegebenen Wert bleibt, wobei der jeweils aktuelle Maximalanreicherungsfaktor für die aktuellen Werte von Drehzahl, Last und Spätverstellungswinkel multiplikativ mit einem vom aktuellen Spätverstellungswinkel abhängigen Faktor (FV) kleiner als 1 modifiziert wird, um eine zu starke, die Abgaswerte verschlechternde und den Kraftstoffverbrauch erhöhende Anfettung des Luft/Kraftstoff-Gemisches zu vermeiden.

## Claims

1. Method for controlling the exhaust-gas temperature in an internal combustion engine (10) having pinking control, by varying the air/fuel mixture supplied to the engine as a function of retarding the ignition in order to prevent pinking, as is carried out by a pinking control device (15), in which case the mixture is increasingly enriched as the amount of retard is increased; characterized in that the enrichment is varied selectively on the basis of cylinders as a function of the respective retard for the ignition in one cylinder (11.1 - 11.4), and in that maximum enrichment factors (FA_MAX) are determined for predetermined value pairs of engine speed and load, such that, when the ignition is retarded to the maximum extent, the exhaust-gas temperature always remains below a predetermined value, in which case the respective present maximum enrichment factor for the present values of the engine speed, load and retard angle is modified multiplicatively by a factor (FV), which is dependent on the present retard angle and is less than unity, in order to avoid excess enrichment of the air/fuel mixture, which makes the exhaust-gas levels worse and increases the fuel consumption.

## Revendications

1. Procédé servant à commander la température des gaz d'échappement dans le cas d'un moteur à combustion interne (10) avec régulation du cliquetis en faisant varier le mélange air/carburant amené au moteur en fonction des réglages de l'allumage dans le sens du retard pour empêcher le cliquetis, tels que ceux qui sont effectués par un système de régulation du cliquetis (15), dans lequel on enrichit le mélange de façon croissante par un réglage croissant dans le sens du retard,
   caractérisé en ce que

   • l'enrichissement effectué de façon sélective par cylindre est modifié en fonction du réglage correspondant dans le sens du retard de l'allumage dans un cylindre (11.1 - 11.4), et
   • pour des paires de valeurs prédéfinies de la vitesse de rotation et de la charge on détermine des facteurs d'enrichissement maximal (FA_MAX) de telle sorte que dans le cas d'un déplacement maximal dans le sens du retard de l'allumage la température des gaz d'échappement demeure respectivement en dessous d'une valeur prédéfinie, le facteur respectivement actuel d'enrichissement maximal pour les valeurs actuelles de la vitesse de rotation, de la charge et de l'angle de décalage dans le sens du retard étant modifié en étant multiplié par un facteur (FV) inférieur à 1, qui est fonction de l'angle actuel de décalage dans le sens du retard, pour éviter d'avoir un enrichissement trop fort du mélange air/carburant qui altère les valeurs des gaz d'échappement et augmente la consommation de carburant.

FIG.1

FIG.2